# EUROPÄISCHE PATENTANMELDUNG

(11) **EP 2 009 402 A2**
(43) Veröffentlichungstag der Anmeldung: **31.12.2008**
(21) Anmeldenummer: 08103864.8
(22) Anmeldetag: 08.05.2008
(51) Int. Cl.: G01C 21/36

(54) **Verfahren zur Darstellung von Informationen auf einem Display eines Navigationssystems sowie ein Navigationssystem mit einem Display**

(30) Priorität: 29.06.2007 DE 102007030227
(71) Anmelder: ROBERT BOSCH GMBH, 70442 Stuttgart (DE)
(72) Erfinder: Walkling, Uwe, 31035, Barfelde (DE); Fiedler, Marco, 31199, Diekholzen (DE); Brandes, Henry, 31556, Woelpinghausen (DE); Listle, Holger, 31141, Hildesheim (DE); Osmers, Ralf, 31139, Hildesheim (DE); Klein, Thomas, 31061, Alfeld (DE); Krewer, Joerg, 30982, Pattensen (DE); Lueer, Stefan, 31141, Hildesheim (DE)

(57) **Zusammenfassung**

Bei einem Verfahren zur Darstellung von Informationen auf einem Display (15) eines Navigationssystems (100) bei dem von dem Navigationssystem (100) Zieldaten (13) einer Datenquelle (11) herangezogen werden, um auf dem Display (15) eine Fahrtroute anzuzeigen, ist zur Erweiterung der Anzeigemöglichkeiten vorgeschlagen, dass neben den Zieldaten (13) weitere Metadaten (14) von der Datenquelle (11) herangezogen werden. Weiterhin wird ein entsprechend ausgebildetes Navigationssystem (100) angegeben.

## Beschreibung

### TECHNISCHES GEBIET

Die Erfindung betrifft ein Verfahren zur Darstellung von Informationen auf einem Display eines Navigationssystems, wobei von dem Navigationssystem Zieldaten von einer Datenquelle herangezogen werden, um auf dem Display eine Fahrtroute anzuzeigen, sowie ein entsprechend ausgebildetes Navigationssystem.

### STAND DER TECHNIK

Navigationssysteme, die entweder stationär beispielsweise in einem Kraftfahrzeug eingebaut sind oder mobil von einem Nutzer mitgeführt werden können, verfügen über eine Empfangseinrichtung zum Empfang von Satellitensignalen z.B. nach dem GPS- oder Galileo-Standard. Mit Hilfe dieser Signale kann die Position auf der Erdoberfläche ermittelt werden. Ein Nutzer kann einen gewünschten Zielpunkt und gegebenenfalls einen von der momentanen Position abweichenden Startpunkt eingeben und in einer Routenberechnungseinheit wird vom Navigationssystem eine Fahrtroute zu dem gewünschten Ziel berechnet und über optische und/oder akustische Ausgabeeinrichtungen, vorzugsweise einem Display oder einem sonstigen Bildschirm beispielsweise im Armaturenbrett eines Kraftfahrzeugs, werden dem Nutzer Richtungshinweise ausgegeben. Die entsprechenden Zieldaten über verschiedene mögliche Fahrtstrecken sowie eventuelle Hindernisse auf der Fahrtstrecke, z.B. ein Fluss der mit einer Fähre überquert werden muss, sind üblicherweise in einer Datenquelle wie einer CD-Rom gespeichert, können aber auch drahtlos aktualisiert werden. Prinzipiell können bei der Berechnung einer Fahrtroute bestimmte Arten von Straßen ausgeschlossen werden, beispielsweise keine Mautstrecken oder keine Autobahnabschnitte. Weiterhin können von dem Navigationssystem aktuelle Verkehrsmeldungen, die nach dem TMC-Standard ausgestrahlt und empfangen werden, berücksichtigt werden, um beispielsweise einem Stau auszuweichen.

Hierzu ist es aus der DE 199 63 767 A1 bekannt, dass solche dynamischen Daten, d.h. unter anderem Verkehrsmeldungen, den jeweiligen statischen Daten von geografischen Elementen zugeordnet werden, wobei die statischen Daten die unveränderlichen Daten beispielsweise bezüglich des tatsächlich vorhandenen Streckennetzes sind. Somit ist insbesondere die notwendige Übertragungskapazität für die dynamischen Daten verringert, da nur dynamische Daten aus dem momentanen Fahrtgebiet verarbeitet werden.

Weiterhin ist es aus der DE 101 31 197 A1 bekannt, dass von dem Navigationssystem zusätzliche Informationen, die für die Navigation relevant sind, in Form von Benutzer-Programmen in das Navigationssystem geladen werden, die als sogenannte Navlets vom Fahrer nutzbar sind. Ein solches Navlet kann beispielsweise einen Touristenführer für eine Stadt umfassen. Allerdings tritt hier der Nachteil auf, dass eine erheblich vergrößerte Rechenkapazität zur Verarbeitung zusätzlicher Programme oder Programmteile im Navigationssystem notwendig ist.

Bei den bekannten Navigationssystemen hat es sich als nachteilig herausgestellt, dass eine Erweiterung der Anzeigemöglichkeiten auf dem Display ohne eine Anpassung der Gerätesoftware des Anzeigesystems praktisch nicht möglich ist, da die für die Anzeige benötigten Informationen fest in der Gerätesoftware hinterlegt sind.

Ausgehend von diesem Stand der Technik liegt der Erfindung die Aufgabe zugrunde, ein Verfahren zur Darstellung von Informationen der eingangs genannten Art anzugeben, mit dem auf einem Display des Navigationssystems beliebig geänderte Daten oder Informationen dargestellt werden können. Des Weiteren soll ein entsprechend ausgebildetes Navigationssystem geschaffen werden.

### BESCHREIBUNG DER ERFINDUNG

Diese Aufgaben werden durch die Merkmale der Ansprüche 1 und 4 gelöst.

Der Kerngedanke der Erfindung besteht darin, dass von einem Anzeigesystem bzw. dem Navigationssystem in an sich bekannter Weise auf Zieldaten zurückgegriffen wird, um optisch und/oder akustisch eine möglichst optimale Fahrtroute zu dem vom Nutzer gewünschten Ziel anzuzeigen. Neben diesen Zieldaten, also unter anderem das eigentliche Streckennetz sowie dessen Befahrbarkeit, sind in der Datenquelle, vorzugsweise einer CD-Rom oder einem sonstigen dauerhaften und gegebenenfalls überschreibbaren Speichermedium, weitere Metadaten hinterlegt, auf die das Anzeigesystem ebenfalls zurückgreifen kann. Somit sind neben den Zieldaten weitere Daten oder Informationen in dem Navigationsdatensatz gespeichert. Auf diese Weise ist es möglich, über eine Änderung der auf der Datenquelle hinterlegten Daten, die gegebenenfalls auch über den Abruf einer zentralen Stelle aktualisiert werden können, die Anzeigemöglichkeiten des Anzeigesystems zu verändern.

Es versteht sich, dass ein an sich bekanntes Navigationssystem, das über ein Display mit einem Anzeigesystem verfügt, wobei von dem Anzeigesystem die auf einer Datenquelle hinterlegten Zieldaten eingelesen werden, entsprechend hardwaretechnisch und/oder vorzugsweise softwaretechnisch derart ausgelegt ist, dass von einer Gerätesoftware des Anzeigesystems diese zusätzlichen Metadaten von der Datenquelle mit heruntergelesen werden können und bei der Darstellung auf dem Display Berücksichtigung finden.

Die Zieldaten sind üblicherweise hierarchisch nach Ländern z.B. Deutschland, Frankreich etc. gegliedert und in jedem Land wiederum nach Städten aufgegliedert, so dass auf einem Informationsbaum zuerst das Land und nachfolgend eine Stadt, beispielsweise Hamburg oder München in Deutschland, ausgewählt werden. Die Metadaten werden ebenfalls zuerst nach Ländern gegliedert hierarchisch abgespeichert, wobei unterhalb der Hierarchieebene Deutschland oder Frankreich verschiedene Kategorien beispielsweise Stadt, Postleitzahl, Straße und Attribute wie die Öffnungszeiten eines Museums oder dergleichen und graphische Elemente (Icons) u.a. ein Parkplatzsymbol hierarchisch gegliedert sind. Erfindungsgemäß werden nunmehr die Attribute und graphischen Elemente zu einer Kategorie zugeordnet. Dabei kann für das graphische Element Parkplatz nunmehr erst jetzt eine Unterscheidung nach Sprachen oder Ländern vorgenommen werden, so dass erst beim Abrufen der Information des graphischen Elements durch das Anzeigesystem bzw. das Navigationssystem eine Unterscheidung unter anderem zwischen deutsch und französisch erfolgt, wobei in deutscher und französischer Sprache jeweils das gleiche graphische Element hinterlegt ist, versehen beispielsweise mit weiteren Informationen wie Öffnungszeiten oder dergleichen in der jeweiligen Sprache.

Die Strukturierung der Daten kann den Systemanforderungen entsprechend angepasst und vom Fachmann in an sich beliebiger Weise implementiert werden. Dabei werden die sogenannten "Bezeichner" (Werte, Identifier) dieser Informationen über die Datensätze hinweg konstant gehalten. Dies ist notwendig, um diese Informationen in dem System abspeichern und mit zukünftigen Datensätzen verwenden zu können. Hierdurch ist sichergestellt, dass die Zuordnung der Informationen über die Datensätze hinweg gewährleistet ist.

Der Vorteil der Erfindung besteht darin, dass in einfacher Weise zusätzliche Informationen, die als Metadaten auf der Datenquelle verfügbar sind, von dem Anzeigesystem ausgewertet und zu den eventuell bereits im Gerätesystem bzw. der Gerätesoftware enthaltenen hinzugefügt und angezeigt werden können. Somit können auf dem Display nahezu beliebige Informationen flexibel dargestellt werden. Insbesondere müssen speicheraufwendige Symbole oder Icons nicht mehr in der Gerätesoftware selbst hinterlegt sein, was erheblichen Speicherplatz bedarf, sondern diese Dateien können auf der Datenquelle hinterlegt werden.

Vorteilhafte Ausgestaltungen der Erfindung sind jeweils der Gegenstand von Unteransprüchen.

Entsprechend den Ansprüchen 2 und 5 sind in den Metadaten zusätzliche Kategorien und/oder Attribute und/oder graphische Elemente enthalten. Als Kategorien werden beispielsweise verschiedene Städte mit ihren Postleitzahlen und den verschiedenen Straßen angesehen, jeweils gegliedert nach verschiedenen Ländern. Diesen einzelnen Kategorien können jeweils Attribute zugeordnet werden wie beispielsweise die Öffnungszeiten eines Museums an einer bestimmten Adresse. Schließlich können auch noch graphische Elemente, sogenannte Icons, als Metadaten auf der Datenquelle hinterlegt sein, beispielsweise das Symbol eines blauen Schildes mit einem weißen P für "Parkplatz". Wird hierbei der Datensatz ausgetauscht, also z.B. auf eine andere Datenquelle zurückgegriffen, kann sich zwar das Icon verändern, der Bezeichner "Parkplatz" bleibt jedoch konstant und wird immer gleich verwendet.

Vorzugsweise werden diese Metadaten entsprechend den Ansprüchen 3 und 6 für jede in dem Datensatz unterstützte Sprache gespeichert, um beim Einstellen einer Sprache beispielsweise für die Anzeige auf dem Display des Navigationssystems, unmittelbar auf die richtigen in der Datenquelle hinterlegten Daten zurückgreifen zu können. Somit ist die erforderliche Rechenkapazität erheblich reduziert. In gleicher Weise können die Metadaten nach verschiedenen Ländern gegliedert, beispielsweise Deutschland, Frankreich und Großbritannien, hinterlegt werden.

Im vorgehenden wurde die Erfindung im Wesentlichen im Zusammenhang mit einem Navigationssystem in einem Kraftfahrzeug beschrieben. Es ist für den Fachmann jedoch ersichtlich, dass auch ein mobiles, vom Nutzer mitzuführendes Navigationssystem entsprechend ausgelegt sein kann.

### Kurzbeschreibung der Zeichnungen

Eine Ausführungsform der Erfindung wird nachstehend anhand der Zeichnung näher erläutert. Es zeigt:

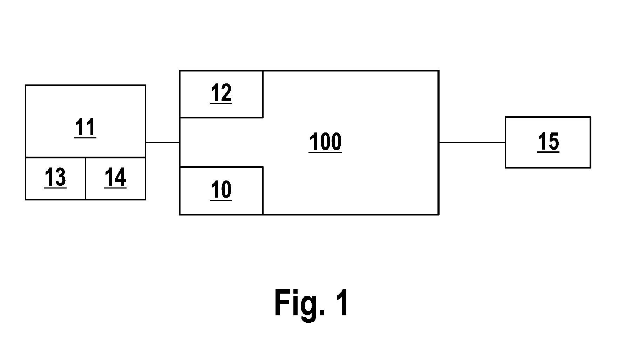

- Fig. 1:: ein Blockschaltbild eines Navigationssystems.

### Bester Weg zur Ausführung der Erfindung

Aus der schematischen Darstellung in Figur 1 ist der grundsätzliche Aufbau eines erfindungsgemäßen Navigationssystems 100 entnehmbar. Im Navigationssystem 100 ist eine Routenberechnungseinheit 10 vorhanden, die mit Hilfe von in einer Datenquelle 11 hinterlegten Zieldaten 13 sowie der von einer Positionsbestimmungseinrichtung 12 ermittelten Position in an sich bekannter Weise eine Fahrtroute von einem gewählten oder dem aktuellen Ausgangspunkt zu einem vom Nutzer gewünschten Zielpunkt ermittelt und beispielsweise über ein Display 15 dem Nutzer anzeigt. Hierzu sind auf der Datenquelle 11 nicht nur Zieldaten 13 wie unter anderem Informationen über das tatsächliche Straßen- und Wegenetz gespeichert, sondern auch weitere Metadaten 14, bevorzugt aufgeteilt nach Kategorien, Attributen und graphischen Elementen, wobei diese Metadaten 14 auch getrennt für mehrere Sprachen bzw. für verschiedene Länder auf der Datenquelle 11 hinterlegt sein können.

## Patentansprüche

1. Verfahren zur Darstellung von Informationen auf einem Display (15) eines Navigationssystems (100), wobei von dem Navigationssystem (100) Zieldaten (13) von einer Datenquelle (11) herangezogen werden, um auf dem Display (15) eine Fahrtroute anzuzeigen, **dadurch gekennzeichnet, dass** neben den Zieldaten (13) weitere Metadaten (14) von der Datenquelle (11) herangezogen werden.

2. Verfahren nach Anspruch 1, **dadurch gekennzeichnet, dass** in den Metadaten (14) Kategorien und/oder Attribute und/oder graphische Elemente enthalten sind.

3. Verfahren nach Anspruch 1 oder 2, **dadurch gekennzeichnet, dass** die Metadaten (14) in verschiedenen Sprachen und/oder zugeordnet zu verschiedenen Ländern auf der Datenquelle (11) hinterlegt sind.

4. Navigationssystem (100) mit einem Display (15) und einem Anzeigesystem, wobei das Anzeigesystem Zieldaten (13) von einer Datenquelle (11) einliest, um eine Fahrtroute anzuzeigen, **dadurch gekennzeichnet, dass** von dem Anzeigesystem weitere Metadaten (14) von der Datenquelle (11) herunterlesbar sind.

5. Navigationssystem (100) nach Anspruch 4, **dadurch gekennzeichnet, dass** in den Metadaten (14) Kategorien und/oder Attribute und/oder graphische Elemente enthalten sind.

6. Navigationssystem (100) nach Anspruch 4 oder 5, **dadurch gekennzeichnet, dass** die Metadaten (14) in verschiedenen Sprachen und/oder zugeordnet zu verschiedenen Ländern auf der Datenquelle (11) hinterlegt sind.
